# EUROPEAN PATENT APPLICATION

(11) **EP 1 349 399 A2**
(43) Date of publication of application: **01.10.2003**
(21) Application number: 03007049.4
(22) Date of filing: 27.03.2003
(51) Int. Cl.: H04N 9/04, H04N 3/15

(54) **Solid state color image pickup device**

(30) Priority: 27.03.2002 JP 2002087880; 29.03.2002 JP 2002096498
(71) Applicant: MATSUSHITA ELECTRIC INDUSTRIAL CO., LTD., Kadoma-shi, Osaka 571-8501 (JP)
(72) Inventor: Yamaguchi, Takumi, Kyoto-shi, Kyoto 615-0081 (JP); Murata, Takahiko, Osaka-shi, Osaka 559-0015 (JP)
(74) Representative: Grünecker, Kinkeldey, Stockmair & Schwanhäusser Anwaltssozietät

(57) **Abstract**

The solid-state imaging device includes an imaging section including a plurality of unit pixels for photoelectric conversion of incident light arranged in a two-dimensional matrix and a plurality of output sections for outputting pixel signals from the imaging section in parallel at least according to the pixel color.

## Description

### BACKGROUND OF THE INVENTION

The present invention relates to a solid-state imaging device used for digital still cameras, digital video cameras and the like.

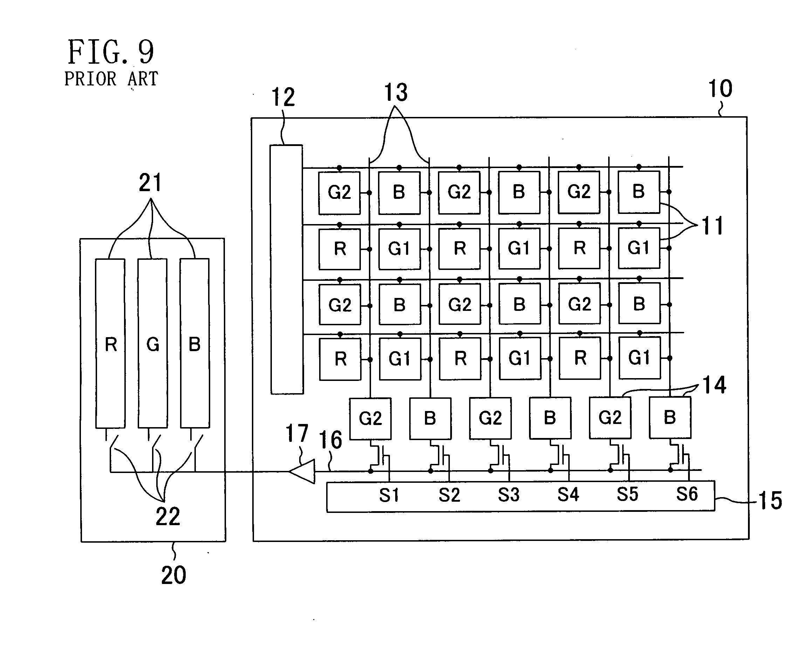

FIG. **9** is a schematic block diagram of a conventional MOS type solid-state imaging device together with its external circuit to be mounted in a camera or the like.

As shown in FIG. **9**, a solid-state imaging device **10** includes: a plurality of unit pixels **11** arranged in a two-dimensional matrix; a vertical shift register **12** for selecting the unit pixels **11** in the column direction (vertical direction); a plurality of vertical signal lines **13** extending in the column direction to be connected with the unit pixels **11** of respective pixel columns; and a row memory section **14** composed of a plurality of memories respectively connected with the vertical signal lines **13** for storing pixel signals for each pixel row.

The plurality of unit pixels **11** have a function of photoelectric conversion of light incident thereon via an optical system such as a lens not shown. In other words, the plurality of unit pixels **11** constitute an imaging section. The unit pixels **11** have respective color filters of any of the three primary colors, red (R), green (G) and blue (B), and are arranged so that the colors of the color filters of the unit pixels **11** (hereinafter, such colors are referred to as pixel colors) represent the Bayer array. In FIG. **9,** the N-th to (N+3)th pixel rows (N is an integer equal to or more than 1) and the first to sixth pixel columns are shown. FIG. **9** shows the state that pixel signals from the N-th pixel row are stored in the row memory section **14.**

The solid-state imaging device **10** further includes: a horizontal shift register **15** for selecting pixel signals stored in the row memory section **14**; an output signal line **16** connected with the memories of the row memory section **14** via respective transistors for reading the pixel signals stored in the row memory section **14** for each pixel row; and an output amplifier (output section) **17** connected with the output signal line **16** for outputting the pixel signals read on the output signal line **16** to an external circuit **20.** In short, pixel signals are sequentially transferred from the row memory section **14** to the output signal line **16** according to the ON/OFF of outputs **S1** to **S6** of the horizontal shift register **15,** and then output from the output amplifier **17.**

The external circuit **20** stores the signals output from the solid-state imaging device **10** separately by sorting the signals according to the pixel colors of the signals (precisely, pixel colors of the unit pixels **11** from which the signals originate). To state more specifically, the external circuit **20** includes a plurality of external memories **21** for respectively storing the signals having different pixel colors (R, G, B) output from the solid-state imaging device **10,** and color selection switches **22** for selecting the external memories **21.** The signals stored in the external memories **21** are used for image processing with electronic circuits and the like not shown.

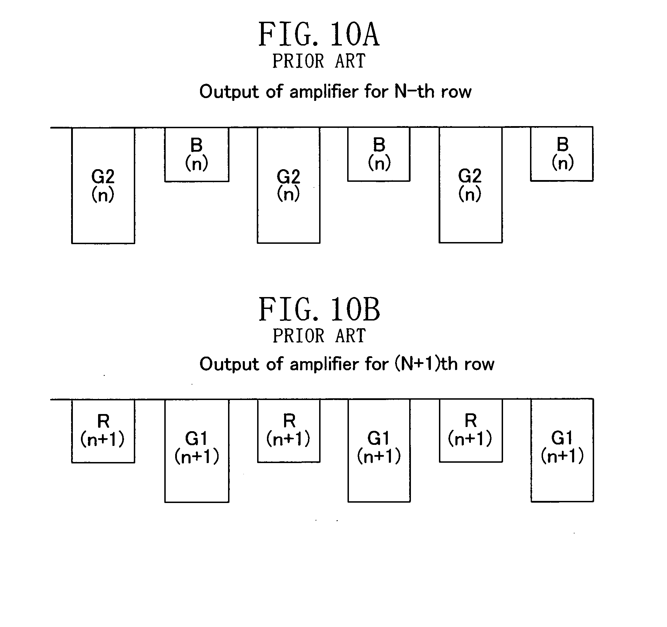

FIGS. **10A** and **10B** show waveforms of outputs from an output amplifier of a conventional MOS type solid-state imaging device, specifically, from the output amplifier **17** of the conventional MOS type solid-state imaging device **10** shown in FIG. **9,** in which FIG. **10A** shows the output waveform obtained when pixel signals in the N-th pixel row are read and FIG. **10B** shows the output waveform obtained when pixel signals in the (N+1)th pixel row are read.

As shown in FIG. **10A,** during the read of pixel signals from the N-th pixel row, a green signal G2(n), a blue signal B(n), a green signal G2(n), a blue signal B(n), a green signal G2(n) and a blue signal B(n) are sequentially output from the output amplifier **17** as the outputs **S1, S2, S3, S4, S5** and **S6** of the horizontal shift register **15** are sequentially turned on.

As shown in FIG. **10B,** during the read of pixel signals from the (N+1)th pixel row, a red signal R(n+1), a green signal G1(n+1), a red signal R(n+1), a green signal G1(n+1), a red signal R(n+1) and a green signal G1(n+1) are sequentially output from the output amplifier **17** as the outputs **S1, S2, S3, S4, S5** and **S6** of the horizontal shift register **15** are sequentially turned on.

The conventional solid-state imaging device has problems as follows. As shown in FIGS. **10A** and **10B,** a signal output from the output amplifier **17** is different in corresponding pixel color from its adjacent signals on the time axis. Therefore, in the external circuit **20**, it is necessary to sort the signals output from the output amplifier **17** according to the pixel color and transfer the sorted output signals to the corresponding external memories **21.** More specifically, in the case of the MOS type solid-state imaging device **10** and the external circuit **20,** the color selection switches **22** must perform switching six times to transfer the pixel signals for one pixel row to the external memories **21**. Therefore, if an attempt is made to speed up the signal output from the conventional solid-state imaging device, this will be limited by the operation of the color selection switches of the external circuit.

In the signal output from the output amplifier **17**, also, since signals corresponding to different pixel colors are adjacent to each other on the time axis, these signals are likely to be mutually influenced, causing the possibility of color mixture. Generation of color mixture will degrade the quality of images obtained by the solid-state imaging device.

In image processing of output signals from the solid-state imaging device, respective average output levels of data corresponding to the pixel colors of red (R), green (G) and blue (B) are used for white balance and the like. This involves addition of the data corresponding to the respective pixel colors. With increase of the number of pixels of a solid-state imaging device, a large-scale arithmetic circuit will be necessary for this operation.

### SUMMARY OF THE INVENTION

An object of the present invention is providing a solid-state imaging device capable of speeding up the signal output without being limited by the operation of color selection switches of an external circuit and also preventing color mixture between output signals, and a camera equipped with such a solid-state imaging device.

To attain the object described above, the first solid-state imaging device of the present invention includes: an imaging section including a plurality of unit pixels for photoelectric conversion of incident light arranged in a two-dimensional matrix; a plurality of output signal lines for reading pixel signals from the plurality of unit pixels separately according to the color and surrounding color arrangement of the plurality of unit pixels; and a plurality of output sections respectively connected to the plurality of output signal lines for outputting the pixel signals read on the plurality of output signal lines.

The second solid-state imaging device of the present invention includes: an imaging section including a plurality of unit pixels for photoelectric conversion of incident light, the plurality of unit pixels being arranged in a two-dimensional matrix so as to constitute at least one group composed of a plurality of pixel rows having different color arrays; and a plurality of output sections for outputting pixel signals from the imaging section, wherein the plurality of output sections include: a first output section for continuously outputting pixel signals from a plurality of first unit pixels that belong to a certain pixel row in the group, have a certain color and are not adjacent to each other; a second output section for continuously outputting pixel signals from a plurality of second unit pixels that belong to the certain pixel row, have another color different from the certain color and are not adjacent to each other; a third output section for continuously outputting pixel signals from a plurality of third unit pixels that belong to another pixel row having a color array different from that of the certain pixel row, have the certain color and have a surrounding color arrangement different from that of the plurality of first unit pixels.

The third solid-state imaging device of the present invention includes: an imaging section including a plurality of unit pixels for photoelectric conversion of incident light, the plurality of unit pixels being arranged in a two-dimensional matrix so as to constitute at least one group composed of a plurality of pixel rows having different color arrays; a row memory section for storing pixel signals from all unit pixels that constitute each pixel row in the group and have a plurality of colors; and a plurality of output sections for outputting the pixel signals stored in the row memory section separately at least according to the color of the plurality of unit pixels, wherein when one unit pixel that belongs to a certain pixel row in the group and has a certain color is different in surrounding color arrangement from another unit pixel that belongs to another pixel row having a color array different from that of the certain pixel row in the group and has the certain color, the plurality of output sections include a certain output section for outputting a pixel signal from the one unit pixel and another output section for outputting a pixel signal from the another unit pixel.

The fourth solid-state imaging device of the present invention includes: an imaging section including a plurality of unit pixels for photoelectric conversion of incident light, the plurality of unit pixels being arranged in a two-dimensional matrix so as to constitute at least one group composed of a plurality of pixel columns having different color arrays; and a plurality of output sections for outputting pixel signals from the imaging section, wherein the plurality of output sections include: a first output section for continuously outputting pixel signals from a plurality of first unit pixels that belong to a certain pixel column in the group, have a certain color and are not adjacent to each other; a second output section for continuously outputting pixel signals from a plurality of second unit pixels that belong to the certain pixel column, have another color different from the certain color and are not adjacent to each other; a third output section for continuously outputting pixel signals from a plurality of third unit pixels that belong to another pixel column having a color array different from that of the certain pixel column, have the certain color and have a surrounding color arrangement different from that of the plurality of first unit pixels.

The fifth solid-state imaging device of the present invention includes: an imaging section including a plurality of unit pixels for photoelectric conversion of incident light, the plurality of unit pixels being arranged in a two-dimensional matrix so as to constitute at least one group composed of a plurality of pixel columns having different color arrays; a column memory section for storing pixel signals from all unit pixels that constitute each pixel column in the group and have a plurality of colors; and a plurality of output sections for outputting the pixel signals stored in the column memory section separately at least according to the color of the plurality of unit pixels, wherein when one unit pixel that belongs to a certain pixel column in the group and has a certain color is different in surrounding color arrangement from another unit pixel that belongs to another pixel column having a color array different from that of the certain pixel column in the group and has the certain color, the plurality of output sections include a certain output section for outputting a pixel signal from the one unit pixel and another output section for outputting a pixel signal from the another unit pixel.

In the first to fifth solid-state imaging devices described above, pixel signals are output in parallel from a plurality of output sections according to the pixel color and the surrounding color arrangement. More specifically, in an arrangement formed of at least one group composed of a plurality of pixel rows or pixel columns having different color arrays as a repetition unit, pixel signals having different colors, as well as pixel signals from unit pixels that belong to different pixel rows or pixel columns, have the same color and are different in surrounding color arrangement, are output in parallel from different output sections. This enables speedup of the signal output. In addition, the signals output in parallel from the plurality of output sections are stored in different memories by use of an external circuit and the like. This eliminates the necessity of providing color selection switches for sorting the signals according to the pixel color. That is, speedup of the entire camera or camera system including the solid-state imaging device can be realized without being limited by the operation speed of the color selection switches of the external circuit.

The pixel color as used herein refers to the color of a color filter provided for each unit pixel. The surrounding color arrangement as used herein refers to an arrangement of pixel colors of the four unit pixels surrounding the unit pixel in question in the row (horizontal) direction and in the column (vertical) direction. The state that the surrounding color arrangement is different indicates that at least one of the four pixel colors in the surrounding color arrangement is different.

In the first to fifth solid-state imaging devices, each of the output sections outputs only signals having a corresponding pixel color continuously, and thus signals adjacent to each other on the time axis have the same pixel color. This prevents the trouble that adjacent signals are mutually influenced causing color mixture, and thus the image quality can be enhanced.

In the first to fifth solid-state imaging devices, signals having the same pixel color are output from different output sections via different output signal lines if they are different in surrounding color arrangement. More specifically, pixel signals from unit pixels that belong to different pixel rows or pixel columns, have the same pixel color and are different in surrounding color arrangement are output from different output sections. In other words, signals having the same pixel color but slightly different in sensitivity due to the difference in surrounding color arrangement are output from different output sections via different output signal lines. Therefore, by reading these signals independently, the signals can be adjusted to have an identical sensitivity value in an external circuit and the like. In this way, a variation in sensitivity between the signals having the same pixel color can be reduced, and thus the image quality can be enhanced.

In the second to fifth solid-state imaging devices, preferably, pixel signals from unit pixels having different colors in the group, as well as pixel signals from unit pixels that belong to different pixel rows or pixel columns in the group, have the same color and are different in surrounding color arrangement, are read to a plurality of different output signal lines simultaneously one by one for each, and then output from the corresponding output sections connected to the plurality of output signal lines.

By arranging as described above, further speed-up of the solid-state imaging device can be realized.

In the first to fifth solid-state imaging device, a pixel signal is preferably output from each of the plurality of output sections via a low-pass filter.

By passing through each low-pass filter, signals having corresponding pixel colors will have respective average output levels with no high-frequency component contained. By using the resultant outputs for white balance and exposure detection, the image quality can be enhanced. If the low-pass filter is composed of a resistance and a capacitor, detection of DC components is attained with a suppressed number of component parts.

The sixth solid-state imaging device of the present invention includes: an imaging section including a plurality of unit pixels for photoelectric conversion of incident light, the plurality of unit pixels being arranged in a two-dimensional matrix so as to constitute a plurality of pixel rows different in color array; a plurality of row memories for storing pixel signals from the imaging section; and a plurality of output sections for outputting the pixel signals stored in the plurality of row memories, wherein the number of the plurality of row memories is equal to or more than the number of the plurality of output sections and equal to or less than the number of a plurality of pixel columns.

The seventh solid-state imaging device of the present invention includes: an imaging section including a plurality of unit pixels for photoelectric conversion of incident light, the plurality of unit pixels being arranged in a two-dimensional matrix so as to constitute a plurality of pixel columns different in color array; a plurality of column memories for storing pixel signals from the imaging section; and a plurality of output sections for outputting the pixel signals stored in the plurality of column memories, wherein the number of the plurality of column memories is equal to or more than the number of the plurality of output sections and equal to or less than the number of a plurality of pixel rows.

In the sixth and seventh solid-state imaging devices, row memories or column memories of the number equal to or more than the number of output sections are provided. Therefore, signals of the same number as the number of output sections can be read simultaneously to the signal lines, and the read signals can be retrieved simultaneously from the output sections. This enables speedup of the solid-state imaging device.

The eighth solid-state imaging device of the present invention includes: an imaging section including a plurality of unit pixels for photoelectric conversion of incident light, the plurality of unit pixels being arranged in a two-dimensional matrix so as to constitute a plurality of pixel rows different in color array; a first output section for continuously outputting pixel signals from a plurality of first unit pixels that belong to a certain pixel row among the plurality of pixel rows, have a certain color and are not adjacent to each other; and a second output section for continuously outputting pixel signals from a plurality of second unit pixels that belong to the certain pixel row, have another color different from the certain color and are not adjacent to each other.

The ninth solid-state imaging device of the present invention includes: an imaging section including a plurality of unit pixels for photoelectric conversion of incident light, the plurality of unit pixels being arranged in a two-dimensional matrix so as to constitute a plurality of pixel rows different in color array; and a plurality of output sections for continuously outputting pixel signals from unit pixels that belong to a certain pixel row among the plurality of pixel rows and have different colors, separately according to the color of the unit pixels.

The tenth solid-state imaging device of the present invention includes: an imaging section including a plurality of unit pixels for photoelectric conversion of incident light, the plurality of unit pixels being arranged in a two-dimensional matrix so as to constitute a plurality of pixel columns different in color array; a first output section for continuously outputting pixel signals from a plurality of first unit pixels that belong to a certain pixel column among the plurality of pixel columns, have a certain color and are not adjacent to each other; and a second output section for continuously outputting pixel signals from a plurality of second unit pixels that belong to the certain pixel column, have another color different from the certain color and are not adjacent to each other.

The eleventh solid-state imaging device of the present invention includes: an imaging section including a plurality of unit pixels for photoelectric conversion of incident light, the plurality of unit pixels being arranged in a two-dimensional matrix so as to constitute a plurality of pixel columns different in color array; and a plurality of output sections for continuously outputting pixel signals from unit pixels that belong to a certain pixel column among the plurality of pixel columns and have different colors, separately according to the color of the unit pixels.

In the eighth to eleventh solid-state imaging devices, pixel signals are output in parallel from a plurality of output sections according to the pixel color. More specifically, pixel signals from unit pixels that belong to the same pixel row or pixel column and have different colors are output in parallel from different output sections. This enables speedup of the signal output. In addition, each of the output sections outputs signals having the same pixel color continuously. Therefore, even if speedup of the signal output is successfully realized, the operation of the color selection switches for selecting signals according to the pixel color is necessary only when switching of the connection between memories for respective pixel colors provided in an external circuit or the like and the output sections is required along with the change of the pixel row or pixel column from which signals are read. That is, it is not necessary to speed up the operation of the color selection switches of the external circuit. Thus, speedup of the entire camera or camera system including the solid-state imaging device can be realized without being limited by the operation speed of the switches.

In the eighth to eleventh solid-state imaging devices, each of the output sections outputs signals having the same pixel color continuously. Therefore, signals adjacent to each other on the time axis have the same pixel color. This prevents the trouble that adjacent signals are mutually influenced causing color mixture, and thus the image quality can be enhanced.

In the eighth to eleventh solid-state imaging devices, pixel signals from unit pixels that belong to pixel rows or pixel columns different in color array and have the same color may not necessarily be output from the same output section. To state differently, the eighth to eleventh solid-state imaging devices have a major feature that pixel signals from the unit pixels that belong to a certain pixel row or pixel column and have the same color are all output from the same output section.

In the eighth to eleventh solid-state imaging devices, in which pixel signals from the unit pixels that belong to the same pixel row or pixel column and have the same color are all output continuously from the same output section, the color selection switches of the external circuit can be operated further slowly, and also the color mixture of signals adjacent to each other on the time axis can be prevented further reliably. This enables further speedup of the signal output of the solid-state imaging device.

In the eighth to eleventh solid-state imaging devices, preferably, the pixel signals from the unit pixels that belong to the same pixel row or pixel column and have different colors are read to a plurality of different output signal lines simultaneously one by one for each, and then output from the corresponding output sections respectively connected to the plurality of output signal lines.

By arranging as described above, further speed-up of the solid-state imaging device can be realized.

The camera of the present invention is a camera equipped with any of the first to eleventh solid-state imaging devices described above. The first to eleventh solid-state imaging devices realize the levels of speedup and enhancement in image quality required for cameras or camera systems in which the solid-state imaging devices are mounted, and therefore have great industrial applicability.

### BRIEF DESCRIPTION OF THE DRAWINGS

FIG. **1** is a schematic block diagram of a MOS type solid-state imaging device together with its external circuit of Embodiment 1 of the present invention.

FIGS. **2A** to **2D** are views showing waveforms of outputs from output amplifiers obtained when pixel signals in the N-th and (N+1)th pixel rows are read in the MOS type solid-state imaging device of Embodiment 1.

FIG. **3** is a schematic block diagram of a MOS type solid-state imaging device together with its external circuit of an alteration to Embodiment 1 of the present invention.

FIGS. **4A** to **4D** are views showing waveforms of outputs (low-pass filtered) from output amplifiers obtained when pixel signals in the N-th and (N+1)th pixel rows are read in the MOS type solid-state imaging device of the alteration to Embodiment 1.

FIG. **5** is a schematic block diagram of a MOS type solid-state imaging device together with its external circuit of Embodiment 2 of the present invention.

FIGS. **6A** and **6B** are views showing waveforms of outputs from output amplifiers obtained when pixel signals in the N-th and (N+1)th pixel rows are read in the MOS type solid-state imaging device of Embodiment 2.

FIG. **7** is a schematic block diagram of a MOS type solid-state imaging device together with its external circuit of a comparative example.

FIG. **8A** and **8B** are views showing waveforms of outputs from an output amplifier obtained when pixel signals in the N-th pixel row and the (N+1)th pixel row, respectively, are read in the MOS type solid-state imaging device of the comparative example.

FIG. **9** is a schematic block diagram of a conventional MOS type solid-state imaging device together with its external circuit.

FIG. **10A** and **10B** are views showing waveforms of outputs from an output amplifier obtained when pixel signals in the N-th pixel row and the (N+1)th pixel row, respectively, are read in the conventional MOS type solid-state imaging device.

### DESCRIPTION OF THE PREFERRED EMBODIMENTS

### (Embodiment 1)

Hereinafter, a solid-state imaging device of Embodiment 1 of the present invention will be described with reference to the relevant drawings.

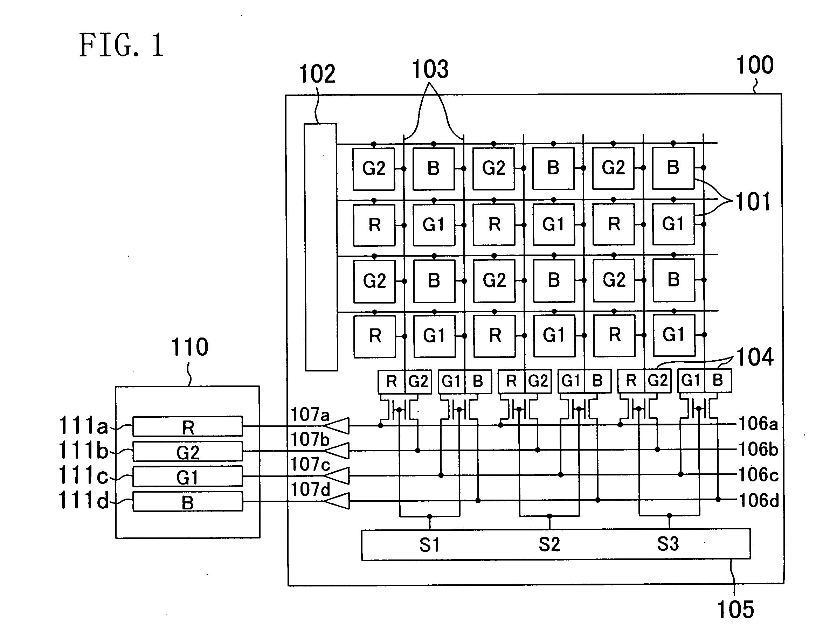

FIG. **1** is a schematic block diagram of a MOS type solid-state imaging device together with its external circuit of Embodiment 1 of the present invention. The solid-state imaging device and the external circuit may be mounted in a camera, a camera system or the like, for example.

As shown in FIG. **1**, a solid-state imaging device **100** includes: a plurality of unit pixels **101** arranged in a two-dimensional matrix; a vertical shift register **102** for selecting the unit pixels **101** in the column direction (vertical direction); a plurality of vertical signal lines **103** extending in the column direction to be connected with the unit pixels **101** of respective pixel columns; and a row memory section **104** composed of a plurality of memories respectively connected with the vertical signal lines **103** for storing pixel signals.

The plurality of unit pixels **101**, placed on a semiconductor substrate not shown, have a function of photoelectric conversion of light incident thereon via an optical system such as a lens not shown. In other words, the plurality of unit pixels **101** constitute an imaging section. The unit pixels **101** have respective color filters of any of the three primary colors, red (R), green (G) and blue (B), and are arranged so that the colors of the color filters of the unit pixels **101** (hereinafter, such colors are referred to as pixel colors) represent the Bayer array. In FIG. **1,** the (N-1)th to (N+2)th pixel rows (N is an integer equal to or more than 2) and the first to sixth pixel columns are shown. As is found from FIG. **1**, the plurality of unit pixels **101** are formed of groups each composed of two pixel rows having different color arrays as repetition units.

The solid-state imaging device **100** further includes: a horizontal shift register **105** for selecting image signals stored in the row memory section **104**; first to fourth output signal lines **106a** to **106d** connected to the memories of the row memory section **104** via respective transistors for reading the image signals stored in the row memory section **104;** and first to fourth output amplifiers (output sections) **107a** to **107d** connected to the respective output signal lines **106a** to **106d** for outputting the pixel signals read on the output signal lines **106a** to **106d** to an external circuit **110.**

The external circuit **110** stores the signals output from the solid-state imaging device **100** separately according to the pixel colors of the signals (precisely, pixel colors of the unit pixels **101** from which the signals originate). To state more specifically, the external circuit **110** includes a plurality of external memories **111a** to **111d** provided for the respective pixel colors (R, G2, G1 and B), which are respectively connected to the output amplifiers **107a** to **107d.** The signals stored in the external memories **111a** to **111d** are used for image processing with electronic circuits and the like not shown.

A feature of the solid-state imaging device of this embodiment is that pixel signals in two pixel rows constituting a group described above are transferred to the row memory section **104,** and then the pixel signals having different pixel colors are read simultaneously to the corresponding different output signal lines **106a** to **106d** from the row memory section **104** according to the ON/OFF of outputs **S1** to **S3** of the horizontal shift register **105.**

FIG. **1** shows the state that pixel signals from the N-th and (N+1)th pixel rows are stored in the row memory section **104.** In this state, when the output **S1** of the horizontal shift register **105** is turned on, for example, a red (R) pixel signal stored in the row memory **104** is read to the first output signal line **106a,** a green (G2) pixel signal stored in the row memory **104** is read to the second output signal line **106b,** a green (G1) pixel signal stored in the row memory **104** is read to the third output signal line **106c,** and a blue (B) pixel signal stored in the row memory **104** is read to the fourth output signal line **106d.** In this way, each of the output signal lines **106a** to **106d** receives a signal having a corresponding color from the row memory section **104,** and therefore each of the output amplifiers **107a** to **107d** connected to the output signal lines **106a** to **106d** outputs the signal having a corresponding color. In other words, the pixel signals corresponding to the four different colors can be output simultaneously from the output amplifiers **107a** to **107d**. This enables speedup of the signal output from the solid-state imaging device **100.**

As described above, pixel signals from the unit pixels having the same color, that is, green (G1) and green (G2), are output separately from the second and third output amplifiers **107b** and **107c.** The unit pixel having green (G1) is different from the unit pixel having green (G2) in surrounding color arrangement (arrangement of pixel colors of the four unit pixels surrounding the unit pixel in question in the row (horizontal) direction and in the column (vertical) direction). Due to this difference in surrounding color arrangement, the chromatic sensitivity may sometimes be different slightly between the pixel signals from the unit pixels having green (G1) and green (G2). In this embodiment, however, in which the pixel signals corresponding to green (G1) and green (G2) are transferred to the output circuit **110** separately via the second and third output amplifiers **107b** and **107c,** the pixel signals corresponding to green (G1) and green (G2) can be adjusted to have the same sensitivity value in the external circuit **110**, for example. By this adjustment, it is possible to reduce a variation in color sensitivity between the signals having the same pixel color of green but originating from different pixel rows. This enables enhancement in image quality.

As described above, the external circuit **110** includes the external memories **111a** to **111d** provided for the respective pixel colors (R, G2, G1 and B). It is therefore unnecessary for the external circuit **110** to have color selection switches for sorting the output signals from the solid-state imaging device **100** according to the pixel color. In the conventional MOS type solid-state imaging device **10** and the external circuit **20** shown in FIG. **9**, for example, the color selection switches **22** must perform switching six times to transfer pixel signals for one pixel row to the external memories **21**. That is to say, in this embodiment, speedup of the external circuit **110** can be realized without being limited by the operation of color selection switches, and thus speedup of the entire camera or camera system including the solid-state imaging device **100** can be realized.

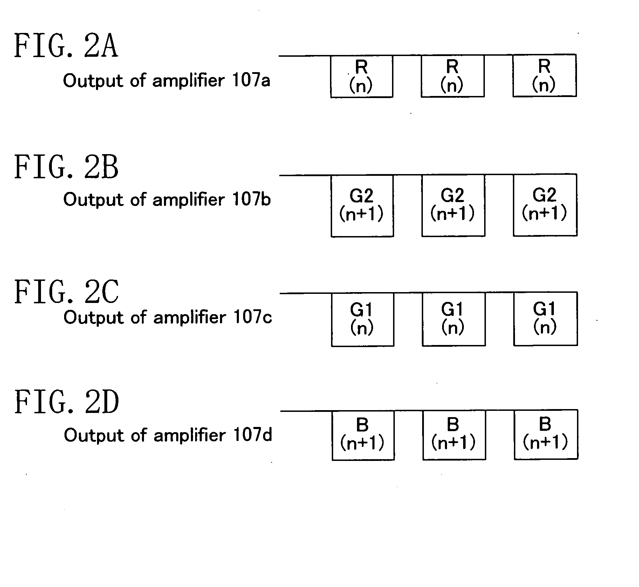

FIGS. **2A** to **2D** show waveforms of the outputs from the output amplifiers **107a** to **107d,** respectively, obtained when pixel signals in the N-th and (N+1)th pixel rows are read in the solid-state imaging device **100** of this embodiment. As shown in FIG. **2A,** red signals R(n), R(n), R(n) from the N-th pixel row are sequentially output from the output amplifier **107a.** As shown in FIG. **2B,** green signals G2(n+1), G2(n+1), G2(n+1) from the (N+1)th pixel row are sequentially output from the output amplifier **107b.** As shown in FIG. **2C,** green signals Gl(n), G1(n), G1(n) from the N-th pixel row are sequentially output from the output amplifier **107c.** As shown in FIG. **2D,** blue signals B(n+1), B(n+1), B(n+1) from the (N+1)th pixel row are sequentially output from the output amplifier **107d.**

In other words, in this embodiment, each of the output amplifiers **107a** to **107d** outputs only signals having a corresponding pixel color continuously. The signals output in parallel from the output amplifiers **107a** to **107d** are stored in the respective different memories **111a** to **111d** of the external circuit **110.** This eliminates the necessity of providing color selection switches for sorting the signals according to the pixel color. In addition, since signals having the same pixel color are continuously output from the respective output amplifiers **107a** to **107d**, the pixel colors of the signals adjacent to each other on the time axis are the same. Therefore, the trouble that adjacent signals are mutually influenced causing color mixture can be prevented, and thus enhanced image quality can be realized.

In this embodiment, pixel signals in a group composed of two pixel rows were once transferred to the row memory section **104,** and then the pixel signals having different pixel colors were read to the different output signal lines **106a** to **106d.** The number of pixel rows constituting one group is not particularly limited. If the group is composed of a plurality of pixel columns different in color array, pixel signals in this group may be once transferred to a column memory section, and then the pixel signals having different pixel colors may be read to different output signal lines. In this case, also, the effects described in this embodiment can be obtained.

In this embodiment, pixel signals from the unit pixels **101** having different colors in one group, as well as pixel signals from the unit pixels **101** that belong to different pixel rows or columns, have the same color and are different in surrounding color arrangement in one group, are preferably read to the different output signal lines **106a** to **106d** simultaneously one by one for each, and then output from the different output amplifiers **107a** to **107d** connected to the respective output signal lines **106a** to **106d.** By this arrangement, further speedup of the solid-state imaging device **100** will be attained.

In this embodiment, the external circuit **110** having the external memories **111a** to **111d** for the respective pixel colors was placed outside the solid-state imaging device **100.** Alternatively, a circuit substantially identical to the external circuit **110** may be placed inside the solid-state imaging device **100**.

In this embodiment, each of the plurality of unit pixels **101** had a primary color filter of red (R), green (G) or blue (B). Alternatively, a complementary color filter of cyan (Cy), magenta (Mg), yellow (Ye), green (G) or the like may be provided. The Bayer array was adopted as the color array of the plurality of unit pixels **101.** Alternatively, another color array in which unit pixels having the same color are never adjacent to each other in each pixel row or pixel column may be adopted.

In this embodiment, no existence of an optical black pixel was assumed. Naturally, however, the present invention is also applicable to a case that an optical black pixel region exists on the periphery or inside of the imaging section and a signal from an optical black pixel is read to a horizontal signal line or the like.

In this embodiment, if pixel signals in each pixel row or pixel column are directly read to the output signal lines, no row memory section or column memory section is necessary. When a row memory section is provided, the number of memories (row memories) constituting the row memory section is preferably equal to or more than the number of output sections and equal to or less than the number of pixel columns. Likewise, when a column memory section is provided, the number of memories (column memories) constituting the column memory section is preferably equal to or more than the number of output sections and equal to or less than the number of pixel rows. With this placement, signals of the same number as the number of output sections can be read simultaneously to the output signal lines, and the read signals can be output simultaneously from the output sections. This ensures the speedup of the solid-state imaging device.

### (Alteration to Embodiment 1)

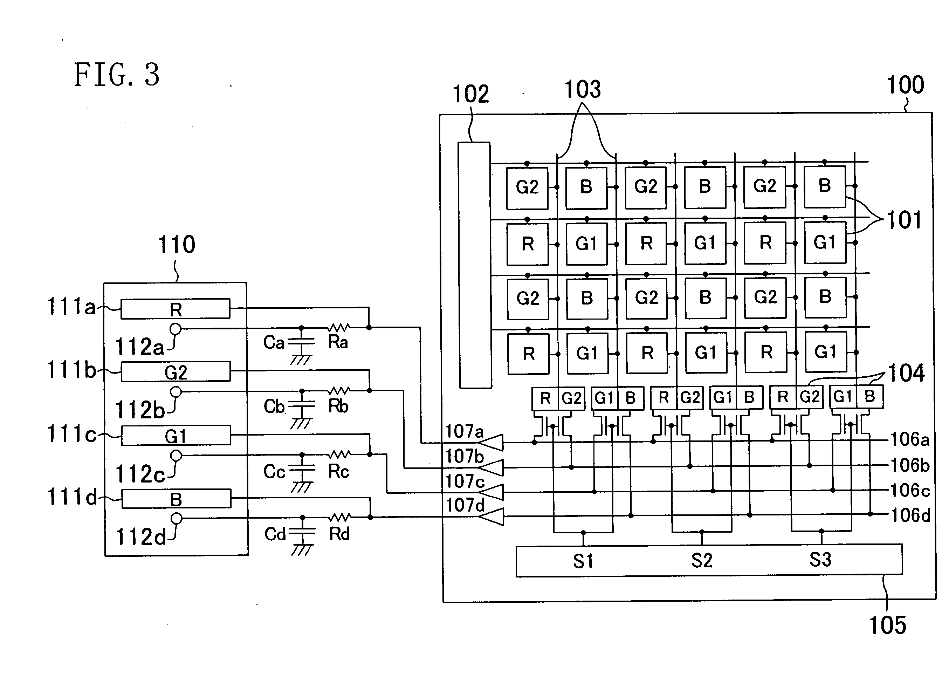

FIG. **3** is a schematic block diagram of a MOS type solid-state imaging device together with its external circuit of an alteration to Embodiment 1 of the present invention. In FIG. **3**, the same components as those in Embodiment 1 shown in FIG. **1** are denoted by the same reference numerals, and the description thereof is omitted here.

As shown in FIG. **3**, the difference of this alteration from Embodiment 1 shown in FIG. **1** is that signals output from the output amplifiers **107a** to **107d** of the solid-state imaging device **100** are sent to first to fourth terminals **112a** to **112d** of the external circuit **110** via respective low-pass filters. More specifically, a low-pass filter composed of a resistance Ra and a capacitor Ca is provided between the output amplifier **107a** and the terminal **112a,** a low-pass filter composed of a resistance Rb and a capacitor Cb is provided between the output amplifier **107b** and the terminal **112b**, a low-pass filter composed of a resistance Rc and a capacitor Cc is provided between the output amplifier **107c** and the terminal **112**c, and a low-pass filter composed of a resistance Rd and a capacitor Cd is provided between the output amplifier **107d** and the terminal **112d.**

In this alteration, low-pass filtered signals having different pixel colors, from which high-frequency components have been removed, are obtained at the terminals **112a** to **112d** of the external circuit **110**. That is, average output levels are obtainable for the signals having different pixel colors. By using these outputs for white balance and exposure detection, enhanced image quality can be realized. In addition, since each low-pass filter is composed of a resistance and a capacitor, detection of DC components is attained with a suppressed number of component parts.

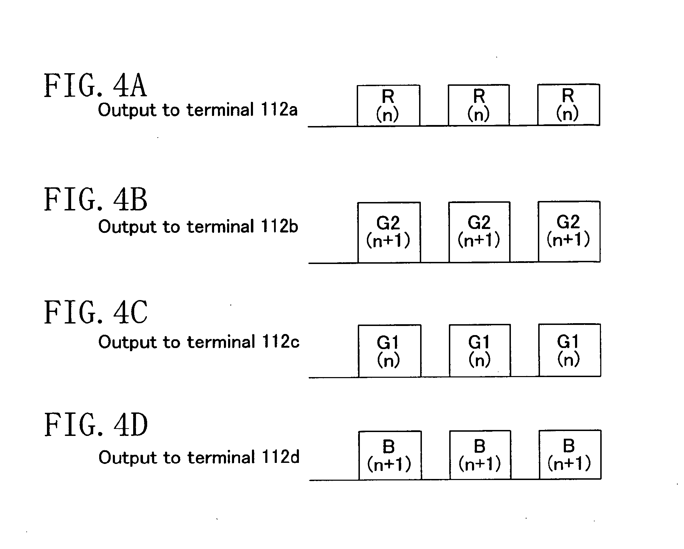

FIGS. **4A** to **4D** show output waveforms of signals output from the output amplifiers **107a** to **107d** to the terminals **112a** to **112d,** respectively, obtained when pixel signals in the N-th and (N+1)th pixel rows are read in the solid-state imaging device **100** of this alteration. As shown in FIG. **4A,** red signals R(n), R(n), R(n) from the N-th pixel row are sequentially output from the output amplifier **107a** to the terminal **112a** in an average and flat waveform with no high-frequency component contained. As shown in FIG. **4B,** green signals G2(n+1), G2(n+1), G2(n+1) from the (N+1)th pixel row are sequentially output from the output amplifier **107b** to the terminal **112b** in an average and flat waveform with no high-frequency component contained. As shown in FIG. **4C,** green signals G1(n), G1(n), G1(n) from the N-th pixel row are sequentially output from the output amplifier **107c** to the terminal **112c** in an average and flat waveform with no high-frequency component contained. As shown in FIG. **4D,** blue signals B(n+1), B(n+1), B(n+1) from the (N+1)th pixel row are sequentially output from the output amplifier **107d** to the terminal **112d** in an average and flat waveform with no high-frequency component contained.

### (Embodiment 2)

Hereinafter, a solid-state imaging device of Embodiment 2 of the present invention will be described with reference to the relevant drawings.

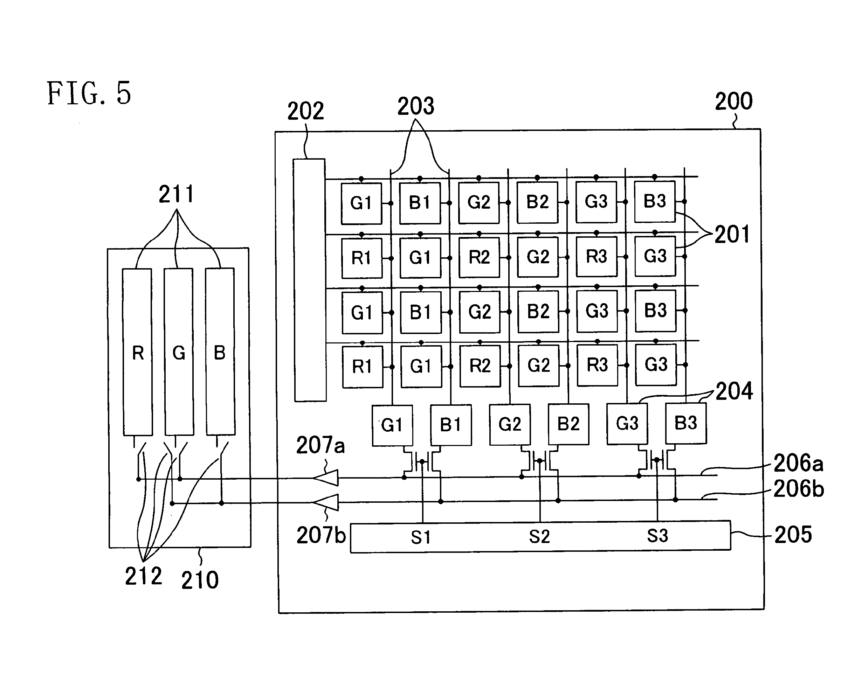

FIG. **5** is a schematic block diagram of a MOS type solid-state imaging device together with its external circuit of Embodiment 2 of the present invention. The solid-state imaging device and the external circuit may be mounted in a camera, a camera system or the like, for example.

As shown in FIG. **5**, a solid-state imaging device **200** includes: a plurality of unit pixels **201** arranged in a two-dimensional matrix; a vertical shift register **202** for selecting the unit pixels **201** in the column direction (vertical direction); a plurality of vertical signal lines **203** extending in the column direction to be connected with the unit pixels **201** of respective pixel columns; and a row memory section **204** composed of a plurality of memories respectively connected with the vertical signal lines **203** for storing pixel signals.

The plurality of unit pixels **201**, placed on a semiconductor substrate not shown, have a function of photoelectric conversion of light incident thereon via an optical system such as a lens not shown. In other words, the plurality of unit pixels **201** constitute an imaging section. The unit pixels **201** have respective color filters of any of the three primary colors, red (R), green (G) and blue (B), and are arranged so that the colors of the color filters of the unit pixels **201** (hereinafter, such colors are referred to as pixel colors) represent the Bayer array. In FIG. **5,** the N-th to (N+3)th pixel rows (N is an integer equal to or more than 1) and the first to sixth pixel columns are shown. As is found from FIG. **5**, the plurality of unit pixels **201** are formed of groups each composed of two pixel rows having different color arrays as repetition units.

The solid-state imaging device **200** further includes: a horizontal shift register **205** for selecting image signals stored in the row memory section **204;** first and second output signal lines **206a** and **206b** connected to the memories of the row memory section **204** via respective transistors for reading the image signals stored in the row memory section **204;** and first and second output amplifiers (output sections) **207a** and **207b** connected to the output signal lines **206a** and **206b** for outputting the pixel signals read on the output signal lines **206a** and **206b** to an external circuit **210.**

The external circuit **210** stores the signals output from the solid-state imaging device **200** separately according to the pixel colors of the signals (precisely, pixel colors of the unit pixels **201** from which the signals originate). To state more specifically, the external circuit **210** includes a plurality of external memories **211** provided for the respective pixel colors (R, G and B) and color selection switches **212** for selecting the external memories **211** (that is, selecting the connection between the output amplifiers **207a** and **207b** and the external memories **211**). The signals stored in the external memories **211** are used for image processing with electronic circuits and the like not shown.

A feature of the solid-state imaging device **200** of this embodiment is that pixel signals in the pixel rows constituting a group described above are transferred to the row memory section **204** for each row, and then the pixel signals from the same pixel row in the row memory section **204** are read to either of the first and second output signal lines **206a** and **206b** depending on the pixel color of the pixel signals simultaneously according to the ON/OFF of outputs **S1** to **S3** of the horizontal shift register **205.**

FIG. **5** shows the state that pixel signals from the N-th pixel row are stored in the row memory section **204.** In this state, for example, green (G1, G2 and G3) pixel signals stored in the row memory section 204 are read to the first output signal line **206a,** and blue (B1, B2 and B3) pixel signals stored in the row memory section **204** are read to the second output signal line **206b.** In this way, only signals having the same colors are respectively read to the output signal lines **206a** and **206b** from the row memory section **204,** and thus two kinds of signals having different colors are output simultaneously from the output amplifiers **207a** and **207b** connected to the output signal lines **206a** and **206b.** In other words, pixel signals corresponding to the two kinds of colors can be output simultaneously from the output amplifiers **207a** and **207b**. This enables speedup of the signal output of the solid-state imaging device **200.**

The signals output from the solid-state imaging device **200** (from the output amplifiers **207a** and **207b**) are stored in the external memories **211** corresponding to the pixel colors of the signals via the color selection switches **212** in the external circuit **210.** For example, in the case shown in FIG. **5**, the color selection switches **212** operate to connect the first output amplifier **207a** with the green (G) external memory **211** to thereby allow all the green (G) output signals from the first output amplifier **207a** to be stored in the green (G) external memory **211.** Simultaneously, the color selection switches **212** operate to connect the second output amplifier **207b** with the blue (B) external memory **211** to thereby allow all the blue (B) output signals from the second output amplifier **207b** to be stored in the external memory **211**. In this way, in this embodiment, only one time of switching is necessary to enable the pixel signals for one pixel row to be stored in the external memories **211**. In other words, in this embodiment, even if speedup of the signal output is successfully realized, the operation of the color selection switches **211** is necessary only when switching of the connection between the external memories **211** and the output amplifiers **207a** and **207b** is required along with the change of the pixel row from which signals are read. On the contrary, in the case of the conventional MOS type solid-state imaging device **10** and the external circuit **20** shown in FIG. **9**, for example, the color selection switches **22** must perform switching six times to transfer pixel signals for one pixel row to the external memories **21.** That is, in this embodiment, it is unnecessary to speed up the color selection switches **212,** and thus speedup of the entire camera or camera system including the solid-state imaging device **200** can be realized without being limited by the operation speed of the switches.

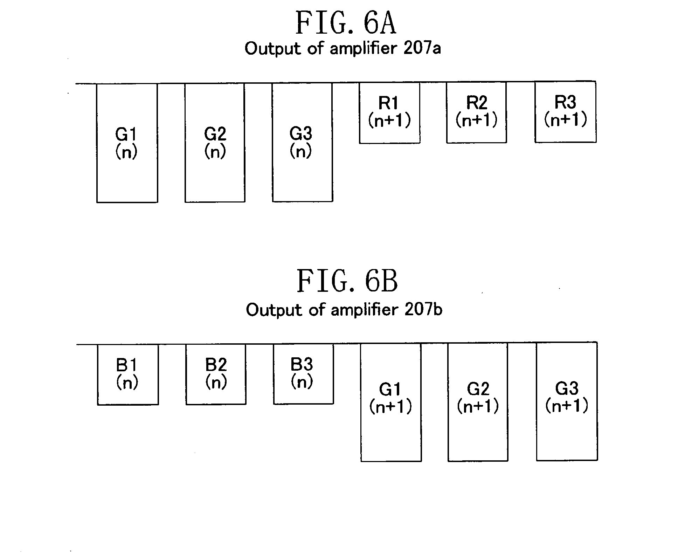

FIGS. **6A** and **6B** show output waveforms of signals output from the output amplifiers **207a** and **207b,** respectively, obtained when pixel signals in the N-th and (N+1)th pixel rows are read in the solid-state imaging device **200** of this embodiment. As shown in FIGS. **6A** and **6B**, during the read of pixel signals from the N-th pixel row, green signals G1(n), G2(n) and G3(n) are sequentially output from the output amplifier **207a,** and blue signals B1(n), B2(n) and B3(n) are sequentially output from the output amplifier **207b.** Subsequently, during the read of pixel signals from the (N+1)th pixel row, red signals R1(n+1), R2(n+1) and R3(n+1) are sequentially output from the output amplifier **207a,** and green signals G1(n+1), G2(n+1) and G3(n+1) are sequentially output from the output amplifier **207b**.

That is, in this embodiment, pixel signals from a plurality of unit pixels that belong to the same pixel row, have the same color and are not adjacent to each other are continuously output from each of the output amplifiers **207a** and **207b.** Therefore, when pixel signals are to be stored in the external memories **211** of the external circuit **210**, the color selection switches **212** are operated only at the change of the pixel row from which signals are read (that is, operated only once for each pixel row). This eliminates the necessity of speedup of the operation of the color selection switches **212.** To state more specifically, each of the output amplifiers **207a** and **207b** outputs both pixel signals from the N-th pixel row and pixel signals from the (N+1)th pixel row, which are different in color. In view of this, the color selection switches **212** may be operated only when the pixel row is changed from the N-th row to the (N+1)th row. Therefore, low-speed operation of the color selection switches **212** is allowed.

In this embodiment, since signals having the same pixel color are continuously output from each of the output amplifiers **207a** and **207b**, the pixel colors of the signals adjacent to each other on the time axis are the same. Therefore, the trouble that adjacent signals are mutually influenced causing color mixture can be prevented, and thus the image quality can be enhanced.

In particular, in this embodiment, the effect that low-speed operation of the color selection switches **212** is allowed and the effect that the image quality is enhanced by prevention of color mixture described above will be great when the speedup of the signal output from the solid-state imaging device **200** is attained.

In this embodiment, pixel signals from all the unit pixels **201** that belong to the same pixel row and have the same color were read continuously. This case can derive the effects of this embodiment described above to the fullest. However, the effect of allowing low-speed operation of the color selection switches **212** and the effect of enhancement in image quality described above will also be obtained when pixel signals from at least two unit pixels **201** that belong to the same pixel row and have the same color are read continuously.

In this embodiment, pixel signals were transferred to the row memory section **204** for each pixel row, and then the transferred pixel signals having different pixel colors were read to the different output signal lines **206a** and **206b** from the row memory section **204.** Alternatively, pixel signals may be transferred to a column memory section for each pixel column, and then the transferred pixel signals having different pixel colors may be read to the different output signal lines. In this case, also, the effects of this embodiment can be obtained.

In this embodiment, pixel signals from the unit pixels **201** having different colors in the same pixel row or pixel column are preferably read to the different output signal lines **206a** and **206b** simultaneously one by one for each, and then output from the different output amplifiers **207a** and **207b** connected to the output signal lines **206a** and **206b**. By this arrangement, further speedup of the solid-state imaging device **200** will be attained.

In this embodiment, the external circuit **210** having the external memories **211** for the respective pixel colors is placed outside the solid-state imaging device **200.** Alternatively, a circuit substantially identical to the external circuit **210** may be placed inside the solid-state imaging device **200**.

In this embodiment, each of the plurality of unit pixels **201** had a primary color filter of red (R), green (G), or blue (B). Alternatively, a complementary color filter of cyan (Cy), magenta (Mg), yellow (Ye), green (G) or the like may be provided. The Bayer array was adopted as the color array of the plurality of unit pixels **201.** Alternatively, another color array in which unit pixels having the same color are never adjacent to each other in each pixel row or pixel column may be adopted.

In this embodiment, no existence of an optical black pixel was assumed. Naturally, however, the present invention is also applicable to a case that an optical black pixel region exists on the periphery or inside of the imaging section and a signal in an optical black pixel is read to a horizontal signal line or the like.

In this embodiment, if pixel signals in each pixel row or pixel column are directly read to the output signal lines, no row memory section or column memory section is necessary.

### (Comparative example)

A solid-state imaging device as a comparative example of Embodiment 2 will be described with reference to the relevant drawings.

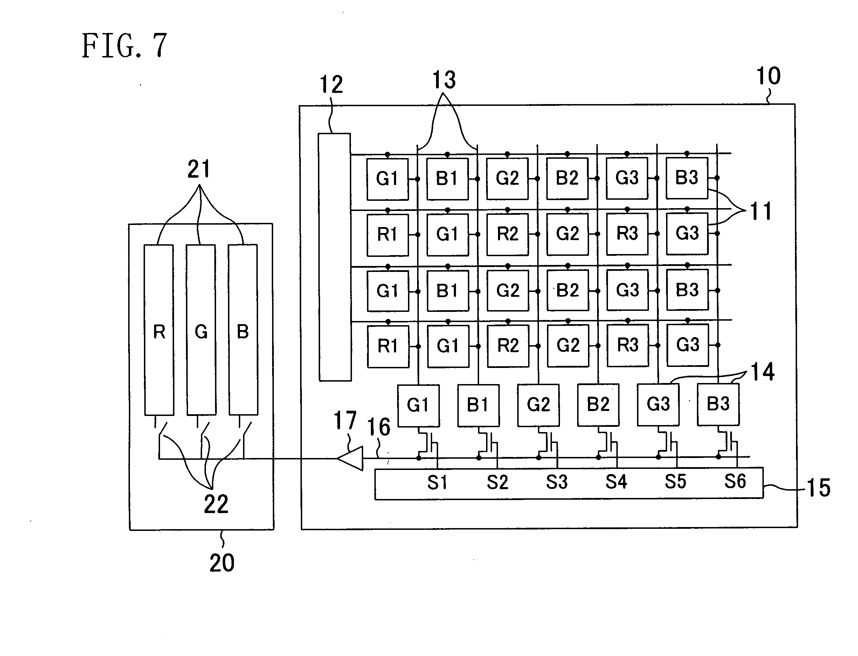

FIG. **7** is a schematic block diagram of a MOS type solid-state imaging device together with its external circuit of a comparative example. In FIG. **7**, the same components as those of the conventional MOS type solid-state imaging device shown in FIG. **9** are denoted by the same reference numerals, and the description thereof is omitted here.

The comparative example shown in FIG. **7** is different from the conventional configuration shown in FIG. **9** in that the color arrays of the pixel rows are the same as those in Embodiment **2** shown in FIG. **5.**

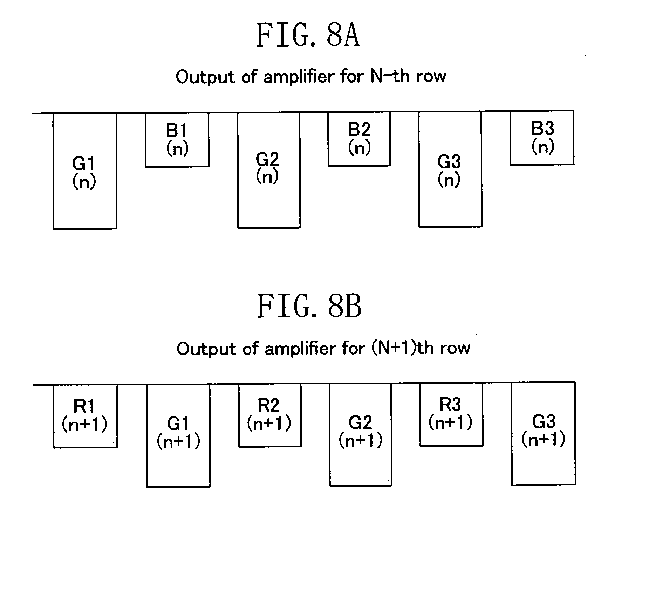

FIGS. **8A** and **8B** show waveforms of outputs from the output amplifier **17** of the solid-state imaging device **10** shown in FIG. **7,** in which FIG. **8A** shows the output waveform obtained when pixel signals in the N-th pixel row are read and FIG. **8B** shows the output waveform obtained when pixel signals in the (N+1)th pixel row are read.

As shown in FIG. **8A,** during the read of pixel signals from the N-th pixel row, a green signal G1(n), a blue signal B1(n), a green signal G2(n), a blue signal B2(n), a green signal G3(n) and a blue signal B3(n) are sequentially output from the output amplifier **17** as the outputs **S1, S2, S3, S4, S5** and **S6** of the horizontal shift register **15** are sequentially turned on.

As shown in FIG. **8B,** during the read of pixel signals from the (N+1)th pixel row, a red signal R1(n+1), a green signal G1(n+1), a red signal R2(n+1), a green signal G2(n+1), a red signal R3(n+1) and a green signal G3(n+1) are sequentially output from the output amplifier **17** as the outputs **S1, S2, S3, S4, S5** and **S6** of the horizontal shift register **15** are sequentially turned on.

As shown in FIGS. **8A** and **8B,** in signal output from the output amplifier **17,** any signals adjacent to each other on the time axis are different in corresponding pixel color. Therefore, in the external circuit **20**, the color selection switches **22** must sort the signals output from the output amplifier **17** according to the pixel color at high speed and transfer the sorted output signals to the corresponding external memories **21.** More specifically, in the case of the MOS type solid-state imaging device **10** and the external circuit **20** shown in FIG. **7**, switching of the color selection switches **22** must be performed six times to transfer the pixel signals for one pixel row to the external memories **21.** Therefore, in this comparative example, if speedup of the signal output from the solid-state imaging device **10** is attempted, this will be limited by the operation of the color selection switches **22** of the external circuit **20**. In addition, in this comparative example, since signals having different pixel colors (signals output from the output amplifier **17**) are adjacent to each other on the time axis, these signals are likely to be mutually influenced. This may cause color mixture and then degrade the image quality.

While the present invention has been described in preferred embodiments, it will be apparent to those skilled in the art that the disclosed invention may be modified in numerous ways and may assume many embodiments other than that specifically set out and described above. Accordingly, it is intended by the appended claims to cover all modifications of the invention which fall within the true spirit and scope of the invention.

## Claims

1. A solid-state imaging device comprising:
an imaging section including a plurality of unit pixels for photoelectric conversion of incident light arranged in a two-dimensional matrix;
a plurality of output signal lines for reading pixel signals from the plurality of unit pixels separately according to the color and surrounding color arrangement of the plurality of unit pixels; and
a plurality of output sections respectively connected to the plurality of output signal lines for outputting the pixel signals read on the plurality of output signal lines.

2. A solid-state imaging device comprising:
an imaging section including a plurality of unit pixels for photoelectric conversion of incident light, the plurality of unit pixels being arranged in a two-dimensional matrix so as to constitute at least one group composed of a plurality of pixel rows having different color arrays; and
a plurality of output sections for outputting pixel signals from the imaging section,
wherein the plurality of output sections comprise:
a first output section for continuously outputting pixel signals from a plurality of first unit pixels that belong to a certain pixel row in the group, have a certain color and are not adjacent to each other;
a second output section for continuously outputting pixel signals from a plurality of second unit pixels that belong to the certain pixel row, have another color different from the certain color and are not adjacent to each other;
a third output section for continuously outputting pixel signals from a plurality of third unit pixels that belong to another pixel row having a color array different from that of the certain pixel row, have the certain color and have a surrounding color arrangement different from that of the plurality of first unit pixels.

3. The device of Claim 2, wherein the pixel signals from the plurality of first unit pixels, the pixel signals from the plurality of second unit pixels and the pixel signals from the plurality of third unit pixels are read to a first output signal line, a second output signal line and a third output signal line, respectively, simultaneously one by one for each, and then output from the first output section connected to the first output signal line, the second output section connected to the second output signal line, and the third output section connected to the third output signal line, respectively.

4. A solid-state imaging device comprising:
an imaging section including a plurality of unit pixels for photoelectric conversion of incident light, the plurality of unit pixels being arranged in a two-dimensional matrix so as to constitute at least one group composed of a plurality of pixel rows having different color arrays;
a row memory section for storing pixel signals from all unit pixels that constitute each pixel row in the group and have a plurality of colors; and
a plurality of output sections for outputting the pixel signals stored in the row memory section separately at least according to the color of the plurality of unit pixels,
wherein when one unit pixel that belongs to a certain pixel row in the group and has a certain color is different in surrounding color arrangement from another unit pixel that belongs to another pixel row having a color array different from that of the certain pixel row in the group and has the certain color, the plurality of output sections include a certain output section for outputting a pixel signal from the one unit pixel and another output section for outputting a pixel signal from the another unit pixel.

5. The device of Claim 4, wherein pixel signals from unit pixels having different colors in the group, as well as pixel signals from unit pixels that belong to different pixel rows in the group, have a same color and are different in surrounding color arrangement, are read to a plurality of different output signal lines from the row memory section simultaneously one by one for each, and then output from the corresponding output sections, among the plurality of output sections, connected to the plurality of output signal lines.

6. A solid-state imaging device comprising:
an imaging section including a plurality of unit pixels for photoelectric conversion of incident light, the plurality of unit pixels being arranged in a two-dimensional matrix so as to constitute at least one group composed of a plurality of pixel columns having different color arrays; and
a plurality of output sections for outputting pixel signals from the imaging section,
wherein the plurality of output sections comprise:
a first output section for continuously outputting pixel signals from a plurality of first unit pixels that belong to a certain pixel column in the group, have a certain color and are not adjacent to each other;
a second output section for continuously outputting pixel signals from a plurality of second unit pixels that belong to the certain pixel column, have another color different from the certain color and are not adjacent to each other;
a third output section for continuously outputting pixel signals from a plurality of third unit pixels that belong to another pixel column having a color array different from that of the certain pixel column, have the certain color and have a surrounding color arrangement different from that of the plurality of first unit pixels.

7. The device of Claim 6, wherein the pixel signals from the plurality of first unit pixels, the pixel signals from the plurality of second unit pixels and the pixel signals from the plurality of third unit pixels are read to a first output signal line, a second output signal line and a third output signal line, respectively, simultaneously one by one for each, and then output from the first output section connected to the first output signal line, the second output section connected to the second output signal line, and the third output section connected to the third output signal line, respectively.

8. A solid-state imaging device comprising:
an imaging section including a plurality of unit pixels for photoelectric conversion of incident light, the plurality of unit pixels being arranged in a two-dimensional matrix so as to constitute at least one group composed of a plurality of pixel columns having different color arrays;
a column memory section for storing pixel signals from all unit pixels that constitute each pixel column in the group and have a plurality of colors; and
a plurality of output sections for outputting the pixel signals stored in the column memory section separately at least according to the color of the plurality of unit pixels,
wherein when one unit pixel that belongs to a certain pixel column in the group and has a certain color is different in surrounding color arrangement from another unit pixel that belongs to another pixel column having a color array different from that of the certain pixel column in the group and has the certain color, the plurality of output sections include a certain output section for outputting a pixel signal from the one unit pixel and another output section for outputting a pixel signal from the another unit pixel.

9. The device of Claim 8, wherein pixel signals from unit pixels having different colors in the group, as well as pixel signals from unit pixels that belong to different pixel columns in the group, have a same color and are different in surrounding color arrangement, are read to a plurality of different output signal lines from the column memory section simultaneously one by one for each, and then output from the corresponding output sections, among the plurality of output sections, connected to the plurality of output signal lines.

10. The device of any of Claims 1, 2, 4, 6 and 8, wherein a pixel signal is output from each of the plurality of output sections via a low-pass filter.

11. The device of Claim 10, wherein the low-pass filter includes a resistance and a capacitor.

12. A solid-state imaging device comprising:
an imaging section including a plurality of unit pixels for photoelectric conversion of incident light, the plurality of unit pixels being arranged in a two-dimensional matrix so as to constitute a plurality of pixel rows different in color array;
a plurality of row memories for storing pixel signals from the imaging section; and
a plurality of output sections for outputting the pixel signals stored in the plurality of row memories,
wherein the number of the plurality of row memories is equal to or more than the number of the plurality of output sections and equal to or less than the number of a plurality of pixel columns.

13. A solid-state imaging device comprising:
an imaging section including a plurality of unit pixels for photoelectric conversion of incident light, the plurality of unit pixels being arranged in a two-dimensional matrix so as to constitute a plurality of pixel columns different in color array;
a plurality of column memories for storing pixel signals from the imaging section; and
a plurality of output sections for outputting the pixel signals stored in the plurality of column memories,
wherein the number of the plurality of column memories is equal to or more than the number of the plurality of output sections and equal to or less than the number of a plurality of pixel rows.

14. A solid-state imaging device comprising:
an imaging section including a plurality of unit pixels for photoelectric conversion of incident light, the plurality of unit pixels being arranged in a two-dimensional matrix so as to constitute a plurality of pixel rows different in color array;
a first output section for continuously outputting pixel signals from a plurality of first unit pixels that belong to a certain pixel row among the plurality of pixel rows, have a certain color and are not adjacent to each other; and
a second output section for continuously outputting pixel signals from a plurality of second unit pixels that belong to the certain pixel row, have another color different from the certain color and are not adjacent to each other.

15. The device of Claim 14, wherein the pixel signals from the plurality of first unit pixels and the pixel signals from the plurality of second unit pixels are read to a first output signal line and a second output signal line, respectively, simultaneously one by one for each, and then output from the first output section connected to the first output signal line and the second output section connected to the second output signal line, respectively.

16. A solid-state imaging device comprising:
an imaging section including a plurality of unit pixels for photoelectric conversion of incident light, the plurality of unit pixels being arranged in a two-dimensional matrix so as to constitute a plurality of pixel rows different in color array; and
a plurality of output sections for continuously outputting pixel signals from unit pixels that belong to a certain pixel row among the plurality of pixel rows and have different colors, separately according to the color of the unit pixels.

17. The device of Claim 16, wherein the pixel signals from the plurality of unit pixels having different colors are read to a plurality of different output signal lines simultaneously one by one for each, and then output from the corresponding output sections respectively connected to the plurality of output signal lines.

18. A solid-state imaging device comprising:
an imaging section including a plurality of unit pixels for photoelectric conversion of incident light, the plurality of unit pixels being arranged in a two-dimensional matrix so as to constitute a plurality of pixel columns different in color array;
a first output section for continuously outputting pixel signals from a plurality of first unit pixels that belong to a certain pixel column among the plurality of pixel columns, have a certain color and are not adjacent to each other; and
a second output section for continuously outputting pixel signals from a plurality of second unit pixels that belong to the certain pixel column, have another color different from the certain color and are not adjacent to each other.

19. The device of Claim 18, wherein the pixel signals from the plurality of first unit pixels and the pixel signals from the plurality of second unit pixels are read to a first output signal line and a second output signal line, respectively, simultaneously one by one for each, and then output from the first output section connected to the first output signal line and the second output section connected to the second output signal line, respectively.

20. A solid-state imaging device comprising:
an imaging section including a plurality of unit pixels for photoelectric conversion of incident light, the plurality of unit pixels being arranged in a two-dimensional matrix so as to constitute a plurality of pixel columns different in color array; and
a plurality of output sections for continuously outputting pixel signals from unit pixels that belong to a certain pixel column among the plurality of pixel columns and have different colors, separately according to the color of the unit pixels.

21. The device of Claim 20, wherein the pixel signals from the plurality of unit pixels having different colors are read to a plurality of different output signal lines simultaneously one by one for each, and then output from the corresponding output sections respectively connected to the plurality of output signal lines.

22. A camera equipped with the solid-state imaging device of any of Claims 1, 2, 4, 6, 8, 14, 16, 18 and 20.
